# EUROPEAN PATENT APPLICATION

(11) **EP 4 672 573 A1**
(43) Date of publication of application: **31.12.2025**
(21) Application number: 23924069.0
(22) Date of filing: 24.02.2023
(51) Int. Cl.: H02K 11/33, H02K 11/02

(54) **DRIVE DEVICE AND ELECTRIC POWER STEERING DEVICE**

(71) Applicant: Mitsubishi Electric Mobility Corporation, Tokyo 100-8310 (JP)
(72) Inventor: NAGAO, Takashi, Tokyo 100-8310 (JP); SAITO, Masatoshi, Tokyo 100-8310 (JP); UNEME, Yutaka, Tokyo 100-8310 (JP)
(74) Representative: Hoffmann Eitle
(86) International application number: PCT/JP2023/006616
(87) International publication number: WO 2024/176417

(57) **Abstract**

A drive device according to the present disclosure includes: a motor including a motor main body having a rotor and two sets of windings, a frame configured to accommodate the motor main body, and a housing fitted to the frame; and a control unit attached to the motor and configured to control a current supplied to the two sets of windings, in which the control unit includes a wiring board having a first surface facing the housing and a second surface opposite to the first surface, a first inverter circuit and a second inverter circuit configured to independently supply a current to each of the two sets of windings, and a CPU configured to control the first inverter circuit and the second inverter circuit, a first switching element constituting the first inverter circuit is disposed on the first surface of the wiring board, and a second switching element constituting the second inverter circuit is disposed on the second surface of the wiring board.

## Description

### Technical Field

The present disclosure relates to a drive device and an electric power steering device.

### Background Art

Patent Document 1 discloses a control device to control a motor. The control device includes a plurality of systems of inverter circuits that control each currents supplied to windings of a plurality of systems provided in the motor. As a result, even in a case where a failure occurs in one inverter circuit, it is possible to continue the driving of the motor, and the redundancy of the system is secured.

### Citation List

### Patent Documents

Patent Document 1: Japanese Patent No. 6056827

### Summary of Invention

### Problem to be Solved by the Invention

In Patent Document 1, switching elements constituting a plurality of systems of inverter circuits are provided on the same surface of a wiring board. In such an arrangement, switching elements constituting the plurality of systems of the inverter circuits are likely to simultaneously be influenced by disturbances such as electromagnetic noise or water intrusion, and there is the possibility that a failure occurs in a plurality of systems of the inverter circuits at the same time. Therefore, there is room for improvement in terms of robustness.

In view of the above circumstances, an object of the present disclosure is to provide a drive device and an electric power steering device that suppress the occurrence of failure in a plurality of systems of the inverter circuits at the same time and improve robustness.

### Means to Solve the Problem

One aspect of a drive device according to the present disclosure includes: a motor that includes a motor main body having a rotor and two sets of windings that cause the rotor to rotate by allowing a current to flow through the two sets of windings, a frame configured to accommodate the motor main body, and a housing fitted to the frame; and a control unit attached to the motor and configured to control the current supplied to the two sets of windings, in which the control unit includes a wiring board having a first surface facing the housing and a second surface opposite to the first surface, a first inverter circuit and a second inverter circuit configured to independently supply the current to each of the two sets of windings, and a CPU configured to control the first inverter circuit and the second inverter circuit, a first switching element constituting the first inverter circuit is disposed on the first surface of the wiring board, and a second switching element constituting the second inverter circuit is disposed on the second surface of the wiring board.

One aspect of the electric power steering device according to the present disclosure includes the drive device.

### Effects of the Invention

According to the present disclosure, it is possible to provide a drive device and an electric power steering device that suppress the occurrence of failure in a plurality of systems of the inverter circuits at the same time and improve robustness.

### Brief Description of Drawings

[FIG. 1] A circuit diagram of a drive device and an electric power steering device according to a first embodiment.
[FIG. 2] A cross-sectional view showing a configuration of a drive device and an electric power steering device according to the first embodiment.
[FIG. 3] A plan view showing a schematic shape of a wiring board and arrangement of components mounted on the wiring board according to the first embodiment.
[FIG. 4] A cross-sectional view showing a heat dissipation structure of a switching element according to the first embodiment.
[FIG. 5] A cross-sectional view showing a heat dissipation structure of a switching element according to a second embodiment.
[FIG. 6] A cross-sectional view showing a heat dissipation structure of a switching element according to a third embodiment.

### Description of Embodiments

Hereinafter, embodiments of the present disclosure will be described with reference to the drawings. The scope of the present disclosure is not limited to the following embodiment, and can be changed in any way within the scope of the technical ideas of the present disclosure.

### First embodiment.

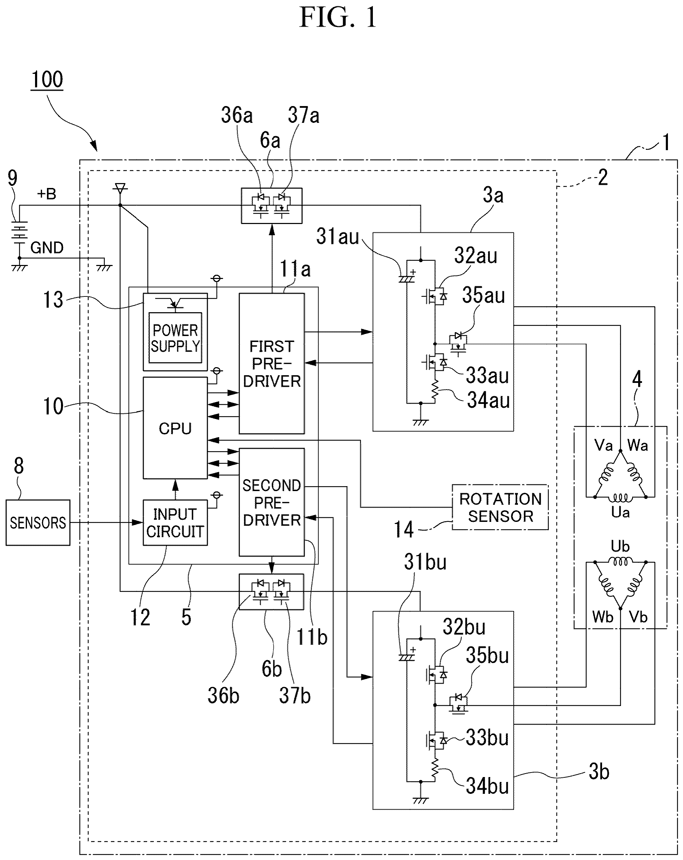

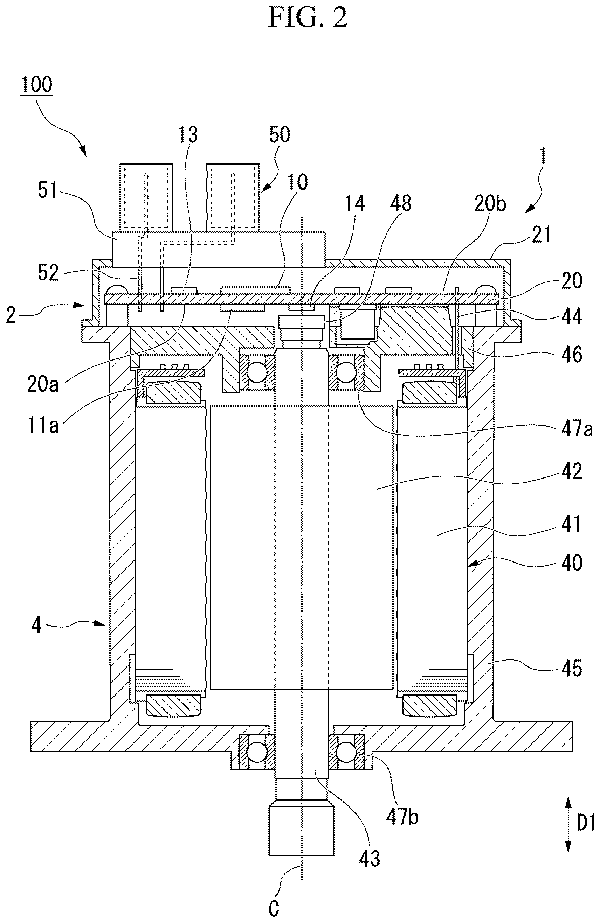

FIG. 1 is a circuit diagram of a drive device 1 and an electric power steering device 100 in the first embodiment. FIG. 2 is a cross-sectional view of the drive device 1. As shown in FIG. 1, the drive device 1 includes a control unit 2 and a motor 4. The electric power steering device 100 is configured to use the torque generated by the motor 4 as an assist torque in a case of steering the vehicle. Although detailed description will be omitted, a rotary shaft 43 of the motor 4 is connected to a steering system of the vehicle via a reducer or the like.

As shown in FIG. 1, the control unit 2 includes a first inverter circuit 3a, a second inverter circuit 3b, a control circuit 5, a first power line switch 6a, a second power line switch 6b, a rotation sensor 14, and the like. The control circuit 5 includes a CPU 10, a first pre-driver 11a, a second pre-driver 11b, an input circuit 12, a power supply circuit 13, and the like.

As shown in FIG. 2, the control unit 2 has a wiring board 20. The first inverter circuit 3a, the second inverter circuit 3b, the control circuit 5, the first power line switch 6a, the second power line switch 6b, the rotation sensor 14, and the like are mounted on the wiring board 20. The wiring board 20 has a first surface 20a and a second surface 20b. The wiring board 20 is covered with a cover 21.

As shown in FIG. 2, the motor 4 includes a motor main body 40, a frame 45, a housing 46, a terminal group 44, and the like. For example, a permanent magnet synchronous motor can be employed as the motor 4.

The motor main body 40 has a stator 41 and a rotor 42. The motor 4 is a three-phase brushless motor, and the stator 41 has two sets of three-phase windings (three-phase coils). The three phases are a U phase, a V phase, and a W phase. In FIG. 1, the first three-phase winding is represented by reference numerals Ua, Va, and Wa, and the second three-phase winding is represented by reference numerals Ub, Vb, and Wb. The windings Ua, Va, and Wa are delta-connected, and the windings Ub, Vb, and Wb are delta-connected. In the following description, these two sets of three-phase windings may be simply referred to as "three-phase windings Ua to Wb". In FIG. 1, the three-phase windings Ua to Wb are delta-connected, but star connection may be used. The rotor 42 includes the rotary shaft 43. The rotary shaft 43 rotates with respect to the stator 41 about the motor axis C.

### (Definition of Direction)

In the present specification, a direction along the motor shaft C is referred to as a first direction D1 or an axial direction. The first direction D1 also coincides with the thickness direction of the wiring board 20. As shown in FIG. 2, the wiring board 20 and the rotor 42 are arranged side by side in the first direction D1. In the first direction D1, a side on which the wiring board 20 is disposed is referred to as upward, and a side on which the rotor 42 is disposed is referred to as downward. The wiring board 20 extends to intersect (substantially orthogonal to) the first direction D1. In the wiring board 20, the second surface 20b is an upward surface facing upward, and the first surface 20a is a downward surface facing downward. That is, the second surface 20b faces the cover 21 side, and the first surface 20a faces the rotor 42 side. A case where viewing from the first direction D1 (axial direction) is referred to as a planar view. A view from the first direction D1 (axial direction) is referred to as a plan view. The first direction D1 may not coincide with the vertical direction.

As shown in FIG. 2, the frame 45 has a tubular shape. The motor main body 40 is accommodated inside the frame 45. A through-hole is formed at the center of a bottom portion of the frame 45, and a lower bearing 47b is fixed inside the through-hole. A lower end portion of the rotary shaft 43 is inserted into the lower bearing 47b.

The housing 46 is provided on an upper portion of the motor 4. The housing 46 is fitted inside an upper end portion of the tubular frame 45. The housing 46 prevents foreign matter from entering the inside of the motor 4. A through-hole is formed in the center of the housing 46, and an upper bearing 47a is fixed inside the through-hole. An upper end portion of the rotary shaft 43 is inserted into the upper bearing 47a.

The upper bearing 47a and the lower bearing 47b hold the rotary shaft 43 such that the rotary shaft 43 can smoothly rotate.
A sensor magnet 48 is attached to an upper end of the rotary shaft 43. The sensor magnet 48 has at least one or more of an N pole and an S pole.

As shown in FIG. 2, the wiring board 20 is disposed above the housing 46. The stator 41 (three-phase windings Ua to Wb) is disposed below the housing 46. The terminal group 44 electrically connects the wiring board 20 and the three-phase windings Ua, Va, Wa, Ub, Vb, and Wb. Specifically, the housing 46 has a through-hole extending in the first direction D1. The terminal group 44 is inserted into the through-hole of the housing 46. The terminal group 44 includes six terminals, each corresponding to the three-phase windings Ua to Wb.

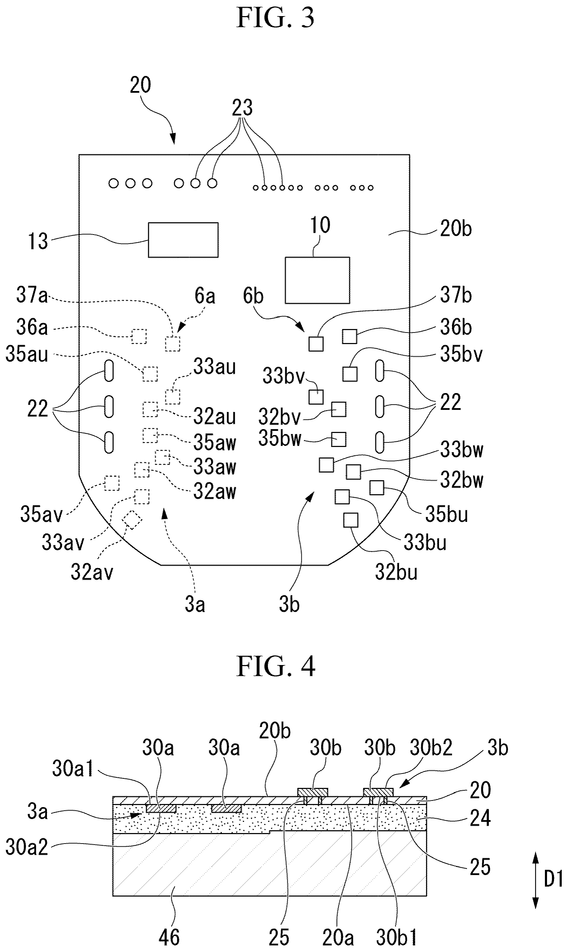

FIG. 3 is a plan view showing a schematic shape of the wiring board 20 and arrangement of components mounted on the wiring board 20. As shown in FIG. 3, the wiring board 20 has a substantially rectangular shape in planar view.

As shown in FIG. 3, six current supply holes 22 are formed in the wiring board 20. Each of the six terminals included in the terminal group 44 is inserted into one of the six current supply holes 22. A current is supplied from the inverter circuits 3a and 3b of the wiring board 20 to the three-phase windings Ua to Wb through the current supply holes 22 and the terminal group 44. As a result, the rotary shaft 43 is rotated. The six terminals included in the terminal group 44 may be end parts of the three-phase windings Ua to Wb or may be relay members electrically connected to the end parts of the three-phase windings Ua to Wb.

The rotation sensor 14 detects a rotation angle of the rotary shaft 43. As the rotation sensor 14, a magnetoresistance (MR) sensor can be used. The rotation sensor 14 detects the rotation angle of the rotary shaft 43 by detecting the magnetic field generated by the sensor magnet 48. The rotation sensor 14 is disposed to face the sensor magnet 48. More specifically, as shown in FIG. 2, the rotation sensor 14 is mounted on the first surface 20a of the wiring board 20. In addition, the rotation sensor 14 is disposed at a position overlapping the sensor magnet 48 in planar view. By disposing the rotation sensor 14 in this way, the detection accuracy of the rotation angle by the rotation sensor 14 is increased, and the controllability of the motor 4 by the drive device 1 can be improved. However, the rotation sensor 14 may be disposed on the second surface 20b of the wiring board 20 as long as a desired detection accuracy can be obtained. Alternatively, the rotation sensor 14 may be disposed at a position shifted from the sensor magnet 48 in planar view.

As shown in FIG. 2, a connector assembly 50 is disposed above the cover 21. The connector assembly 50 is a component in which a connector, a metal bus bar, a terminal, and the like are integrally molded with a holding member 51 that holds the connector, the metal bus bar, the terminal, and the like. The holding member 51 is made of, for example, a resin. The connector assembly 50 connects a battery power supply line and a ground line, which are necessary to control and drive the motor 4, to the wiring board 20. In addition, the connector assembly 50 connects a signal transmission line for transmitting signals such as a torque sensor signal, a vehicle communication signal, and the like to the wiring board 20. The connector assembly 50 may electrically connect a battery power supply line, a ground line, a signal transmission line, and the like to the control unit 2 as a whole. Alternatively, a connector different from the connector assembly 50 may be provided for connection to a battery power supply line, a ground line, or the like.

The connector assembly 50 has a plurality of connector terminals 52 extending downward from the holding member 51. Each of the plurality of connector terminals 52 is inserted into one of a plurality of connector through-holes 23 (see FIG. 3) formed in the wiring board 20. In addition, each connector terminal 52 is electrically connected to a circuit pattern formed on the wiring board 20.

The wiring board 20 is fixed to the housing 46 with screws or the like. The wiring board 20 may be fixed to the cover 21, the connector assembly 50, or the like.

Next, an outline of the operation of each part of the control unit 2 will be described.

The power supply circuit 13 generates a power supply voltage for normally operating each electronic component (the CPU 10, the input circuit 12, the first pre-driver 11a, the second pre-driver 11b, the rotation sensor 14, and the like) constituting the control unit 2 by using the power supplied from the battery 9.

The input circuit 12 inputs various types of information received by the control unit 2 from the sensors 8, the rotation sensor 14, and the like to the CPU 10. Although detailed illustration is omitted, the input circuit 12 includes a torque sensor interface circuit and a vehicle communication interface circuit. The torque sensor interface circuit is a circuit for detecting a steering torque of the driver in the electric power steering device 100 and acquiring information on the steering torque. The vehicle communication interface circuit is a circuit for receiving various types of information from the vehicle system.

The CPU 10 is configured to calculate the various control amounts to control the motor 4. Each of the first pre-driver 11a and the second pre-driver 11b drives the first inverter circuit 3a and the second inverter circuit 3b, based on the calculation result of the CPU 10. The pre-driver 11a and the pre-driver 11b are, for example, FET driver circuits.

As shown in FIG. 1, the first inverter circuit 3a corresponds to the first three-phase windings Ua, Va, and Wa, and the second inverter circuit 3b corresponds to the second three-phase windings Ub, Vb, and Wb. The control unit 2 is configured to control the two inverter circuits 3a and 3b to independently supply power to each of the two sets of three-phase windings Ua to Wb.

Each of the inverter circuits 3a and 3b has three upper arms and three lower arms corresponding to each of the U, V, and W phases. The first inverter circuit 3a and the second inverter circuit 3b have the same circuit configuration. Further, in the inverter circuits 3a and 3b, the circuit configurations related to the U phase, the V phase, and the W phase are the same. Therefore, in the following, the U phase will be described by representing these three phases. That is, the following description is similarly applied to the V phase and the W phase. In addition, in FIG. 1, among the components of the inverter circuits 3a and 3b, the components corresponding to the U phase are shown. However, in practice, the inverter circuits 3a and 3b also have components corresponding to the V phase and the W phase. That is, in FIG. 1, the components corresponding to the V phase and the W phase, which are included in each of the inverter circuits 3a and 3b, are omitted.

As shown in FIG. 1, the first inverter circuit 3a includes a first smoothing capacitor 31au, a first upper arm-side switching element 32au, a first lower arm-side switching element 33au, a first shunt resistor 34au, and a first motor relay switching element 35au. The first upper arm-side switching element 32au is disposed on the upper arm, and the first lower arm-side switching element 33au is disposed on the lower arm. These two first arm-side switching elements 32au and 33au are connected in series. The first motor relay switching element 35au is connected between the two first arm-side switching elements 32au and 33au. The first motor relay switching element 35au has a relay function. That is, the first motor relay switching element 35au switches the power supply on and off from a portion between the two first arm-side switching elements 32au and 33au toward the winding Ua of the motor 4. The first arm-side switching elements 32au and 33au are operated by the first pre-driver 11a based on the calculation result by the CPU 10. As an example of the first upper arm-side switching element 32au, the first lower arm-side switching element 33au, and the first motor relay switching element 35au, a field-effect transistor (FET) can be employed.

The first smoothing capacitor 31au is connected in the vicinity of the first arm-side switching elements 32au and 33au. The first smoothing capacitor 31au has a function of suppressing a power supply voltage fluctuation and noise during switching. The first shunt resistor 34au is connected between the first lower arm-side switching element 33au and the ground. The first shunt resistor 34au is used to detect a drive current flowing through the winding Ua of the motor 4.

The second inverter circuit 3b also has the same circuit configuration as the first inverter circuit 3a. That is, the second inverter circuit 3b has the second smoothing capacitor 31bu, the second upper arm-side switching element 32bu, the second lower arm-side switching element 33bu, the second shunt resistor 34bu, and the second motor relay switching element 35bu. Since the connection relationship and the function of each portion of the second inverter circuit 3b are the same as those of the first inverter circuit 3a, the description thereof will be omitted.

The inverter circuits 3a and 3b may have a choke coil that suppresses the release of noise to the outside of the drive device 1 and suppresses the inflow of noise to the inside of the drive device 1.

The first power line switch 6a includes a first power supply relay switching element 36a and a first reverse contact protection relay switching element 37a. The first power supply relay switching element 36a and the first reverse contact protection relay switching element 37a are connected in series. The parasitic diode of the first reverse contact protection relay switching element 37a is connected to be opposite to the parasitic diode of the first power supply relay switching element 36a. In a case where the first power supply relay switching element 36a and the first reverse contact protection relay switching element 37a are connected in this way, both the following switching function and protection function can be provided in the first power line switch 6a. The switching function is a function of supplying and blocking power to and from the first inverter circuit 3a. The protection function is a function of protecting the first inverter circuit 3a in a case where the voltage (+B) of the battery 9 and the ground are erroneously connected in reverse to each other in a case where the battery 9 is mounted on the vehicle. However, the first power line switch 6a may not have both the switching function and the protection function.

The second power line switch 6b also has the same circuit configuration as the first power line switch 6a. That is, the second power line switch 6b includes the second power supply relay switching element 36b and the second reverse contact protection relay switching element 37b. Since the connection relationship and the function of each portion of the second power line switch 6b are the same as those of the first power line switch 6a, the description thereof will be omitted.

Next, the disposition of each component included in the drive device 1 will be described with reference to FIGS. 3 and 4. FIG. 3 is a view of the wiring board 20 as viewed from the second surface 20b side. In FIG. 3, the components mounted on the second surface 20b are shown by solid lines, and the components mounted on the first surface 20a are shown by broken lines.

As shown in FIG. 3, the CPU 10 and the power supply circuit 13 are mounted on the second surface 20b of the wiring board 20. The CPU 10 may be mounted on the first surface 20a.

The second inverter circuit 3b and the second power line switch 6b are mounted on the second surface 20b of the wiring board 20. Specifically, on the second surface 20b of the wiring board 20, three second upper arm-side switching elements 32bu, 32bv, and 32bw, three second lower arm-side switching elements 33bu, 33bv, and 33bw, and three second motor relay switching elements 35bu, 35bv, and 35bw corresponding to each of the Ub phase, the Vb phase, and the Wb phase are mounted. A second power supply relay switching element 36b and a second reverse contact protection relay switching element 37b are mounted on the second surface 20b of the wiring board 20. In the following description, the switching elements 32bu, 32bv, 32bw, 33bu, 33bv, 33bw, 35bu, 35bv, and 35bw constituting the second inverter circuit 3b are also collectively referred to as "second switching elements 30b".

The first inverter circuit 3a and the first power line switch 6a are mounted on the first surface 20a of the wiring board 20. Specifically, on the first surface 20a of the wiring board 20, three first upper arm-side switching elements 32au, 32av, and 32aw, three first lower arm-side switching elements 33au, 33av, and 33aw, and three first motor relay switching elements 35au, 35av, and 35aw corresponding to each of the Ua phase, the Va phase, and the Wa phase are mounted. A first power supply relay switching element 36a and a first reverse contact protection relay switching element 37a are mounted on the first surface 20a of the wiring board 20. In the following description, the switching elements 32au, 32av, 32aw, 33au, 33av, 33aw, 35au, 35av, and 35aw constituting the first inverter circuit 3a are also collectively referred to as "first switching elements 30a".

As shown in FIG. 4, the electric power steering device 100 according to the first embodiment has a heat dissipation structure that dissipates heat generated by the first switching element 30a and the second switching element 30b to the housing 46. More specifically, the housing 46 is disposed to face the first surface 20a of the wiring board 20. A gap in the first direction D1 is formed between the wiring board 20 and the housing 46, and the thermal connecting member 24 is provided in the gap. The thermal connecting member 24 thermally connects the wiring board 20 and the housing 46. The thermal connecting member 24 has insulating properties and has high thermal conductivity. The thermal connecting member 24 is, for example, a heat dissipation grease. By providing the thermal connecting member 24, the heat generated by the first switching element 30a and the second switching element 30b can be efficiently transmitted to the housing 46 via the thermal connecting member 24.

In addition, the wiring board 20 is provided with a metal thermal conductive member 25 disposed to penetrate from the second surface 20b to the first surface 20a. The thermal conductive member 25 is disposed at a position overlapping the second switching element 30b in planar view. In the example of FIG. 4, the thermal conductive member 25 is a thermal via. The thermal conductive member 25 may be a copper inlay.

The first switching element 30a has a first surface 30a1 facing upward and a second surface 30a2 facing downward. A first surface 30a1 of the first switching element 30a is connected to the first surface 20a of the wiring board 20. The second surface 30a2 of the first switching element 30a has exposed electrodes and functions as a heat dissipation portion. The second surface 30a2 of the first switching element 30a is covered with the thermal connecting member 24. The second surface 30a2 of the first switching element 30a is in contact with the thermal connecting member 24 and is thermally connected to the thermal connecting member 24.

The second switching element 30b has a first surface 30b1 facing downward and a second surface 30b2 facing upward. A first surface 30b1 of the second switching element 30b is connected to the second surface 20b of the wiring board 20. A first surface 30b1 of the second switching element 30b is thermally connected to the thermal connecting member 24 via the thermal conductive member 25.

The heat of the first switching element 30a is dissipated to the housing 46 via the thermal connecting member 24. The heat of the second switching element 30b is dissipated to the housing 46 via the thermal conductive member 25 and the thermal connecting member 24. That is, the first switching element 30a and the second switching element 30b have different heat dissipation paths, and the first switching element 30a and the second switching element 30b have different thermal histories. As a result, in the first switching element 30a and the second switching element 30b, deterioration due to heat generation can be prevented from simultaneously proceeding.

In addition, switching elements having different heat dissipation properties may be used for the first switching element 30a and the second switching element 30b. For example, by making the size, structure, or material of the package component of the switching element, the size or structure of the chip of the switching element, or the like different, the first switching element 30a and the second switching element 30b can have different heat dissipation properties. In this case, in the first switching element 30a and the second switching element 30b, deterioration due to heat generation can be more effectively prevented from simultaneously proceeding.

As described above, the drive device 1 according to the present embodiment includes the motor 4 that includes the motor main body 40 having the rotor 42 and the two sets of windings that rotate the rotor 42 by flowing current, the frame 45 that accommodates the motor main body 40, and the housing 46 fitted to the frame 45, and the control unit 2 attached to the motor 4 and that controls the current supplied to the two sets of windings. The control unit 2 includes a wiring board 20 having a first surface 20a facing the housing 46 and a second surface 20b opposite to the first surface 20a, a first inverter circuit 3a and a second inverter circuit 3b capable of independently supplying currents to each of two sets of windings, and a CPU 10 that controls the first inverter circuit 3a and the second inverter circuit 3b. The first switching element 30a constituting the first inverter circuit 3a is disposed on the first surface 20a of the wiring board 20. The second switching element 30b constituting the second inverter circuit 3b is disposed on the second surface 20b of the wiring board 20.

In addition, the electric power steering device 100 according to the present embodiment includes a drive device 1.

The first switching element 30a constituting the first inverter circuit 3a and the second switching element 30b constituting the second inverter circuit 3b are disposed on different surfaces of the wiring board 20. Therefore, it is possible to suppress the first switching element 30a and the second switching element 30b from being simultaneously affected by the disturbance. Therefore, even in a case where a failure occurs in one inverter circuit due to disturbance, the failure is less likely to occur in the remaining inverter circuit. That is, the motor 4 can be continuously driven by the remaining inverter circuit. Therefore, it is possible to provide the drive device 1 in which the occurrence of failure in a plurality of systems of the inverter circuits 3a, 3b at the same time is suppressed and the robustness is improved.

In addition, a thermal connecting member 24 that thermally connects the housing 46 and the wiring board 20 is provided between the housing 46 and the wiring board 20. The wiring board 20 is provided with a thermal conductive member 25 disposed to penetrate from the first surface 20a to the second surface 20b and that is thermally connected to the thermal connecting member 24. The first switching element 30a is thermally connected to the housing 46 via the thermal connecting member 24. The second switching element 30b is thermally connected to the housing 46 via the thermal conductive member 25 and the thermal connecting member 24.

By making the heat dissipation paths different between the first switching element 30a and the second switching element 30b, deterioration due to heat generation can be prevented from simultaneously proceeding in the first switching element 30a and the second switching element 30b. Therefore, it is possible to prevent the lifetimes of the first switching element 30a and the second switching element 30b from reaching their end simultaneously, and it is possible to more effectively suppress the occurrence of failure in the plurality of systems of the inverter circuits 3a and 3b at the same time.

### Second Embodiment.

Next, a drive device and an electric power steering device according to a second embodiment will be described. Since the basic configurations of the drive device and the electric power steering device according to the present embodiment are the same as those of the drive device and the electric power steering device according to the first embodiment, the different points will be mainly described.

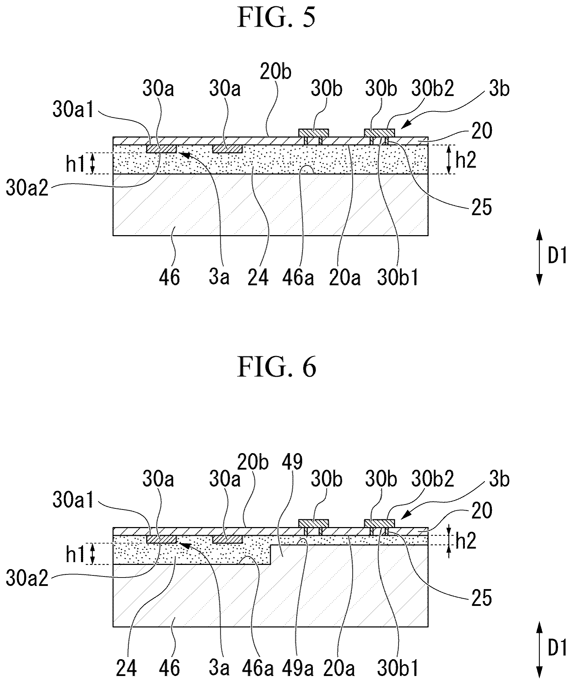

FIG. 5 is a cross-sectional view showing a heat dissipation structure of the switching elements 30a and 30b according to the second embodiment.

As shown in FIG. 5, in the present embodiment, the upper surface 46a of the housing 46 (that is, a surface of the housing 46 facing the wiring board 20) is formed on the same plane. That is, in the housing 46, an upper surface of a portion that overlaps the first switching element 30a in planar view and an upper surface of a portion that overlaps the second switching element 30b in planar view are flush with each other. Accordingly, the housing 46 can be easily processed, and the component cost can be reduced.

In addition, a distance h1 in the first direction D1 between the second surface 30a2 of the first switching element 30a and the upper surface 46a of the housing 46 is smaller than a distance h2 in the first direction D1 between the first surface 20a of the wiring board 20 and the upper surface 46a of the housing 46. That is, the size in the first direction D1 of the portion of the thermal connecting member 24 provided between the first switching element 30a and the housing 46 is smaller than the size in the first direction D1 of the portion of the thermal connecting member 24 that overlaps the second switching element 30b in planar view. As a result, a difference in thermal history between the first switching element 30a and the second switching element 30b is increased, and it is possible to more effectively prevent deterioration due to heat generation from simultaneously proceeding in the first switching element 30a and the second switching element 30b.

### Third Embodiment.

Next, a drive device and an electric power steering device according to a third embodiment will be described. Since the basic configurations of the drive device and the electric power steering device according to the present embodiment are the same as those of the drive device and the electric power steering device according to the first embodiment, the different points will be mainly described.

FIG. 6 is a cross-sectional view showing a heat dissipation structure of the switching elements 30a and 30b according to the third embodiment.

As shown in FIG. 6, in the present embodiment, the housing 46 is provided with a protruding portion 49 that protrudes from an upper surface 46a of the housing 46 toward the wiring board 20. The protruding portion 49 is disposed at a portion overlapping the second switching element 30b in planar view. An upper surface 49a of the protruding portion 49 is closer to the first surface 20a of the wiring board 20 than the upper surface 46a. A distance h1 in the first direction D1 between the second surface 30a2 of the first switching element 30a and the upper surface 46a of the housing 46 is larger than a distance h2 in the first direction D1 between the first surface 20a of the wiring board 20 and the upper surface 49a of the protruding portion 49. That is, the size in the first direction D1 of the portion of the thermal connecting member 24 provided between the first switching element 30a and the housing 46 is larger than the size in the first direction D1 of the portion of the thermal connecting member 24 that overlaps the second switching element 30b in planar view. In this case, the heat dissipation performance of the second switching element 30b can be further improved. As a result, it is possible to thermally accept an increase in heat generation of the second switching element 30b, and it is possible to increase the on-resistance of the second switching element 30b. In general, in the same package, as the on-resistance of the switching element increases, the component cost decreases. Therefore, with the above-described configuration, the costs of the drive device 1 and the electric power steering device 100 can be reduced.

However, the technical scope of the present disclosure is not limited to the above embodiments, and various modifications can be made without departing from the scope of the present disclosure.

For example, in the above-described embodiment, the first inverter circuit 3a is connected to the first power line switch 6a, and the second inverter circuit 3b is connected to the second power line switch 6b. However, a common power line switch may be used in the first inverter circuit 3a and the second inverter circuit 3b.

In the above-described embodiment, the first inverter circuit 3a and the second inverter circuit 3b are connected to a common battery 9 and the ground. However, the first inverter circuit 3a and the second inverter circuit 3b may be connected to a battery and the ground of a different system.

For example, the drive device 1 may be used for purposes other than the electric power steering device 100. In addition, the above-described embodiments or modification examples may be combined as appropriate.

### Reference Signs List

1 Drive device
2 Control unit
4 Motor
3a First inverter circuit
3b Second inverter circuit
20 Wiring board
20a First surface
20b Second surface
24 Thermal connecting member
25 Thermal conductive member
30a First switching element
30b Second switching element
40 Motor main body
41 Stator
42 Rotor
49 Protruding portion
100 Electric power steering device

## Claims

1. A drive device comprising:
a motor that includes a motor main body having a rotor and two sets of windings that cause the rotor to rotate by allowing a current to flow through the two sets of windings, a frame configured to accommodate the motor main body, and a housing fitted to the frame;
and
a control unit attached to the motor and configured to control the current supplied to the two sets of windings,
wherein the control unit includes:
a wiring board having a first surface facing the housing and a second surface opposite to the first surface;
a first inverter circuit and a second inverter circuit configured to independently supply the current to each of the two sets of windings; and
a CPU configured to control the first inverter circuit and the second inverter circuit,
wherein a first switching element constituting the first inverter circuit is disposed on the first surface of the wiring board, and
wherein a second switching element constituting the second inverter circuit is disposed on the second surface of the wiring board.

2. The drive device according to Claim 1,
wherein a thermal connecting member configured to thermally connect the housing and the wiring board is provided between the housing and the wiring board,
a thermal conductive member disposed to penetrate from the first surface to the second surface and thermally connected to the thermal connecting member is provided on the wiring board,
the first switching element is thermally connected to the housing via the thermal connecting member, and
the second switching element is thermally connected to the housing via the thermal conductive member and the thermal connecting member.

3. The drive device according to Claim 2,
wherein when a direction in which the housing and the first surface of the wiring board face each other is defined as a first direction,
a size in the first direction of a portion of the thermal connecting member provided between the first switching element and the housing is smaller than a size in the first direction of a portion of the thermal connecting member that overlaps the second switching element, as viewed from the first direction.

4. The drive device according to Claim 2,
wherein when a direction in which the housing and the first surface of the wiring board face each other is defined as a first direction,
the housing is provided with a protruding portion disposed at a portion overlapping the second switching element as viewed from the first direction and that protrudes toward the wiring board, and
a size in the first direction of a portion of the thermal connecting member provided between the first switching element and the housing is larger than a size in the first direction of a portion of the thermal connecting member that overlaps the second switching element, as viewed from the first direction.

5. An electric power steering device, comprising:
the drive device according to any one of Claims 1 to 4.

## Amended claims

### Amended claims under Art. 19.1 PCT

1. A drive device comprising:
a motor that includes a motor main body having a rotor and two sets of windings that cause the rotor to rotate by allowing a current to flow through the two sets of windings, a frame configured to accommodate the motor main body, and a housing fitted to the frame; and
a control unit attached to the motor and configured to control the current supplied to the two sets of windings,
wherein the control unit includes:
a wiring board having a first surface facing the housing and a second surface opposite to the first surface;
a first inverter circuit and a second inverter circuit configured to independently supply the current to each of the two sets of windings; and
a CPU configured to control the first inverter circuit and the second inverter circuit,
wherein a first switching element constituting the first inverter circuit is disposed on the first surface of the wiring board, and
wherein a second switching element constituting the second inverter circuit is disposed on the second surface of the wiring board, wherein a thermal connecting member configured to thermally connect the housing and the wiring board is provided between the housing and the wiring board,
a thermal conductive member disposed to penetrate from the first surface to the second surface and thermally connected to the thermal connecting member is provided on the wiring board,
the first switching element is thermally connected to the housing via the thermal connecting member, and
the second switching element is thermally connected to the housing via the thermal conductive member and the thermal connecting member,
wherein when a direction in which the housing and the first surface of the wiring board face each other is defined as a first direction,
a size in the first direction of a portion of the thermal connecting member provided between the first switching element and the housing is smaller than a size in the first direction of a portion of the thermal connecting member that overlaps the second switching element, as viewed from the first direction.

2. A drive device comprising:
a motor that includes a motor main body having a rotor and two sets of windings that cause the rotor to rotate by allowing a current to flow through the two sets of windings , a frame configured to accommodate the motor main body, and a housing fitted to the frame; and
a control unit attached to the motor and configured to control the current supplied to the two sets of windings,
wherein the control unit includes:
a wiring board having a first surface facing the housing and a second surface opposite to the first surface;
a first inverter circuit and a second inverter circuit configured to independently supply the current to each of the two sets of windings; and
a CPU configured to control the first inverter circuit and the second inverter circuit,
wherein a first switching element constituting the first inverter circuit is disposed on the first surface of the wiring board, and
wherein a second switching element constituting the second inverter circuit is disposed on the second surface of the wiring board ,
wherein a thermal connecting member configured to thermally connect the housing and the wiring board is provided between the housing and the wiring board,
a thermal conductive member disposed to penetrate from the first surface to the second surface and thermally connected to the thermal connecting member is provided on the wiring board,
the first switching element is thermally connected to the housing via the thermal connecting member, and
the second switching element is thermally connected to the housing via the thermal conductive member and the thermal connecting member,
wherein when a direction in which the housing and the first surface of the wiring board face each other is defined as a first direction,
the housing is provided with a protruding portion disposed at a portion overlapping the second switching element as viewed from the first direction and that protrudes toward the wiring board, and
a size in the first direction of a portion of the thermal connecting member provided between the first switching element and the housing is larger than a size in the first direction of a portion of the thermal connecting member that overlaps the second switching element, as viewed from the first direction.

3. An electric power steering device, comprising:
the drive device according to Claim 1 or 2.
